# DEMANDE DE BREVET EUROPEEN

(11) **EP 2 353 933 A1**
(43) Date de publication de la demande: **10.08.2011**
(21) Numéro de dépôt: 10447006.7
(22) Date de dépôt: 04.02.2010
(51) Int. Cl.: B60P 3/36, B60P 3/39

(54) **Véhicule de camping adapté à l'utilisation d'un ou de plusieurs conteneur(s) mobile(s)**

(71) Demandeur: Goethals, Roland, 4520 Wanze (BE)
(72) Inventeur: Goethals, Roland, 4520 Wanze (BE)

(57) **Abrégé**

Un véhicule de camping (2) comprenenant un ou une pluralité de couchage(s) (3) relevable(s) au plafond (16) et agencé de manière adaptée à l'utilisation d'un ou d'une pluralité de conteneur(s) mobile(s) (1) pouvant être déplacé(s) sur quatre roulettes (11) et sur le plancher (15) de façon à ce que le(s) dit(s) conteneur(s) mobile(s) (1) est (sont) situé(s) le jour sous le(s) couchage(s) et la nuit à un (des) endroit(s) autre(s) que sous le(s) dit(s) couchage(s) (3).Selon l'invention,ce procédé augmente considérablement le volume utilisable.

## Description

### Domaine de l'invention

La présente invention est relative à l'aménagement intérieur d'un véhicule de camping. Peut être considéré comme étant un véhicule de camping : un camping car, un fourgon aménagé, une camionette aménagée, un mobile home, une auto caravane ou une caravane tractée par une voiture.

Les fabricants de véhicules de camping doivent concevoir des aménagements en tenant compte du manque de volume disponible pour insérer des éléments de confort ,prévoir des rangements suffisants dans un volume réduit.

Dans l'état de la technique certaines limites ont été atteintes sauf si l'on augmente le volume extérieur pour augmenter le volume intérieur et créer des véhicules de camping encombrants, lourds, moins maniables et plus énergivores.

Une solution pour augmenter le volume utilisable dévolu à l'insertion des éléments de confort et de rangements à l'intérieur des véhicules de camping sans augmenter le volume extérieur permettrait de voir naître des nouveaux véhicules de camping moins volumineux,plus légers, plus maniables et plus respectueux de l'environnement par une diminution de la consommation énergétique.

Le présent demandeur a conçu la présente invention avec un aménagement intégrant des éléments nouveaux avec des avantages inattendus.

### Exposé de l'invention

La présente invention découle de la constatation suivante:
Si un véhicule de camping dispose d'un ou de plusieurs couchage(s) relevable(s) contre le plafond selon une technique connue de l'état de la technique et si ce véhicule de camping présente la particularité d'avoir une implantation adaptative et que le jour un ou plusieurs conteneur(s) mobile(s) demeurent sous le(s) dit(s) couchage(s) relevé(s) et en étant solidarisé(s) avec la structure du véhicule de camping et que le (les) dit(s) conteneur(s) mobile(s) est (sont) destiné(s) au rangement ou à contenir des éléments et que pour la nuit ce (ces) conteneur(s) mobile(s) est (sont) désolidarisé(s) et déplacé(s) grâce à des roulettes multidirectionnelles et que le (les) dit(s) conteneur(s) mobile(s) stationne(nt) alors à un (des) endroit(s) désigné(s) autre(s) que sous le (les) couchage(s) tout en assurant une circulation à bord réduite pour la nuit mais suffisante.

Selon l'invention, un véhicule de camping conçu avec une implantation adaptative et l'utilisation de conteneurs mobiles cumule les avantages suivants:
Augmentation considérable du volume utilisable pour ranger et insérer des éléments.
Un confort amélioré et une meilleure circulation à bord durant la journée, Une grande polyvalence du véhicule après avoir retiré les conteneurs mobiles et relevé les couchages contre le plafond il reste une grande soute de chargement et le véhicule peut être utilisé partiellement comme une camionnette.
Le véhicule de camping est moins imposant,plus maniable et surtout plus respectueux de l'environnement par une moindre consommation énergétique.

### Description

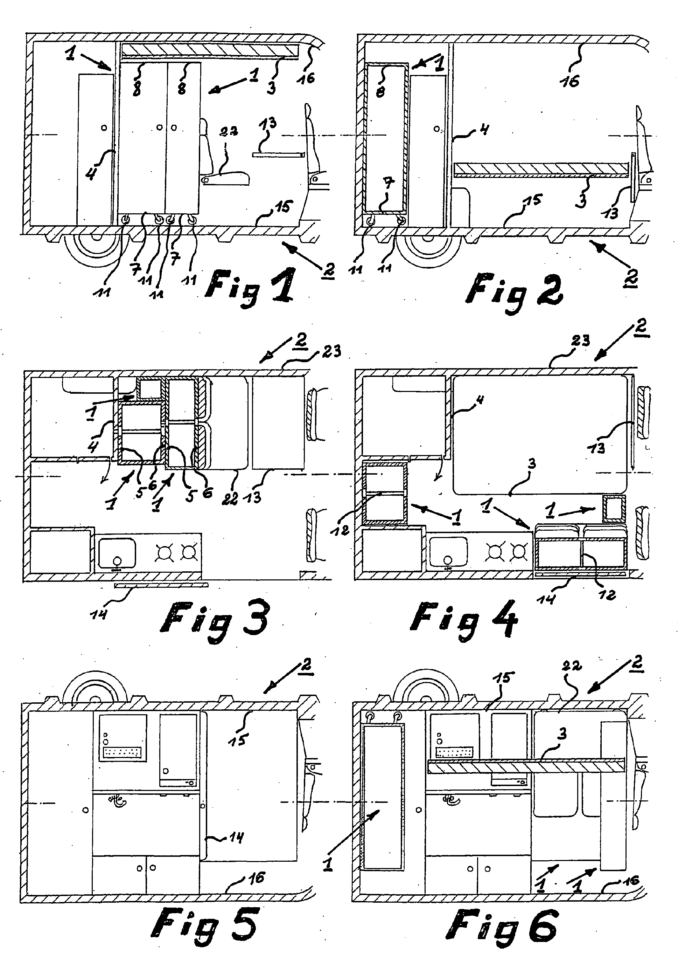

Il existe une multitude de modes de réalisations selon les caractéristiques de la présente invention.Un seul mode de réalisation selon la présente invention sera décrit ci-après en se reportant aux figures 1,2,3,4,5, 6,7,8 et 9 des dessins annexés sur lesquelles:
Les figures 1 à 6 montrent des coupes représentant des vues partielles d'un véhicule de camping selon la présente invention.
La figure 1 montre une coupe verticale longitudinale au milieu de la largeur du véhicule côté gauche en configuration de jour.
La figure 2 est une coupe identique à la figure 1 mais en configuration de nuit.
La figure 3 montre une coupe horizontale à mi-hauteur entre le plancher et le plafond en configuration de jour.
La figure 4 est une coupe identique à la figure 3 mais en configuration de nuit.
La figure 5 montre une coupe verticale longitudinale au milieu de la largeur du véhicule côté droit en configuration de jour.
La figure 6 est une coupe identique à la figure 5 mais en configuration de nuit.
   Pour ne pas surcharger les dessins,les ouvertures de baies ne sont pas représentées,le local dans le coin arrière gauche servant de salle de bain les appareils ne sont pas représentés.
   Les figures 1,3,5 à gauche de la page montrent une vue d'ensemble en configuration de jour et en vis à vis à droite de la page une comparaison directe en configuration de nuit avec les figures 2,4 et 6.

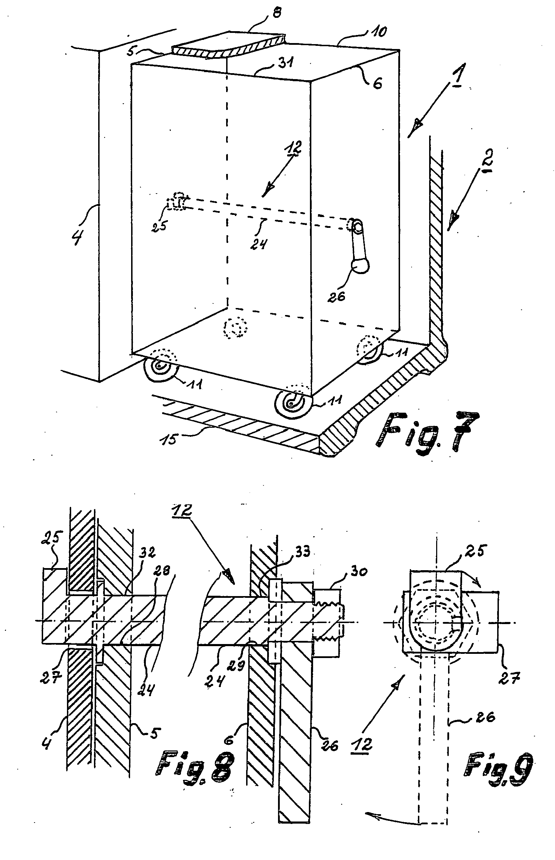

La figure 7 représente en perspective un conteneur mobile solidarisé à la paroi d'appui correspondante d'un véhicule de camping.
Les figures 8 et 9 représentent en coupe un moyen de solidarisation.

Un véhicule de camping 2 avec une implantation adaptative avec une phase de jour et une phase de nuit comme caractérisé selon l'objet de l'invention contient trois conteneurs mobiles 1.L'utilité d'une implantation adaptative et l'utilisation de conteneurs mobiles 1 sera démontrée et l'indissolubilité de l'association entre un véhicule de camping 2 avec l'utilisation de conteneurs mobiles 1 sera également démontré.

Les figures 1,3 et 5 correspondent à la phase d'utilisation du véhicule de camping 2 durant le jour et on peut s'apercevoir sur la figure 3 que le dit véhicule de camping 2 contient 3 conteneurs mobiles 1 regroupés au même endroit.

Un conteneur mobile 1 s'appuie avec sa surface d'appui 5 contre la cloison d'appui 4 et est solidarisé avec cette dernière à l'aide d'un moyen de solidarisation 12.

Un conteneur mobile 1 vient appuyer sa surface d'appui 5 contre la surface d'appui 6 du conteneur mobile 1 premièrement cité et est solidarisé à ce conteneur mobile 1 premièrement cité à l'aide d'un moyen de solidarisation 12 et s'appuie d'autre part contre le flanc 23 du véhicule de camping 2. Un conteneur mobile 1 est intercalé entre les deux conteneurs mobiles 1 premièrement cités et prend ses appuis contre l'un et l'astre des conteneurs mobiles 1 premièrement et deuxièmement cités et contre le flanc 23 du véhicule de camping 2, la face restante est appuyée contre le passage de roue du véhicule de camping 2.

Sur la figure 1 on peut s'apercevoir que durant la phase de jour le couchage 3 est relevé contre le plafond 16 et que les conteneurs mobiles 1 occupent en hauteur l'espace libéré par le couchage 3 relevé et que le conteneur mobile 1 deuxièmement cité supporte un siège banquette repliable 22 déplié en position d'utilisation en face de la table repliable 13 elle même également dépliée en position d'utilisation.

Sur la figure 3 on constate une vaste surface de circulation permettant des déplacements aisés vers l'arrière,vers la cabine de pilotage,vers le dégagement et l'accès extérieur laissé libre par la porte coulissante 14 laissée ouverte,une utilisation aisée de la cuisine et l'accès à la salle de bains.

Ceci termine la description de l'utilisation d'un véhicule de camping 2 et de plusieurs conteneurs mobiles 1 dans la configuration correspondant à la phase de jour.

Ci après est décrit l'utilisation d'un véhicule de camping 2 et de plusieurs conteneurs mobiles 1 dans la configuration correspondant à la phase de nuit.

En se reportant à la figure 4 on se rend immédiatement compte que le couchage 3 est descendu dans sa position d'utilisation et que les conteneurs mobiles 1 occupent maintenant chacun une autre place que celle utilisée durant la phase de jour et que chacun des conteneurs mobiles ont été désolidarisés et que maintenant ils sont bloqués à l'aide du système de bloquage des roulettes multidirectionnelles 11.

La porte coulissante 14 est fermée et n'est plus utilisable étant donné que le passage est occupé par un des dits conteneurs 1.

L'espace entre le couchage 3 et le conteneur mobile 1 stationné devant la la porte coulissante 14 est occupé dans sa partie proche de la cabine de pilotage par un conteneur mobile 1 .

L'espace arrière du véhicule de camping 2 compris entre la salle de bains et le meuble de rangement prolongeant la cuisine est occupé par un conteneur mobile 1.

On peut constater que la surface de circulation est fortement diminuée mais néanmoins suffisante pour entrer ou sortir du couchage 3,pour accéder à la cuisine et à la salle de bains,il est également possible de sortir du couchage 3 pour se rendre dans la cabine de pilotage.

Sur la figure 2 on voit que la table 13 est repliée contre la cabine de pilotage, que la porte d'accès à la salle de bains est tout à fait utilisable , on peut constater que l'espace disponible entre le couchage 3 et le plafond 16 est largement dimentionné.

Ceci termine la description de l'utilisation d'un véhicule de camping 2 et de plusieurs conteneurs mobiles 1 dans la configuration correspondant à la phase de nuit.

La description faite ci-avant démontre et met en évidence et conformément à la présente invention,l'énorme gain de volume utilisable à l'intérieur d'un véhicule de camping 2 lorsqu'il est conçu sur base d'une implantation adaptative de jour et de nuit et avec l'utilisation d'un conteneur mobile 1 ou d'une pluralité de conteneurs mobiles 1.

La liaison implantation adaptative entre un véhicule de camping 2 et d'un ou plusieurs conteneurs mobiles 1 est évidente,indispensable et indissoluble.

Le déplacement vertical du couchage 3 fonctionnne selon un système connu de la technique du domaine des véhicules de camping et une description à ce sujet ne sera pas décrite ici.

Ci après est décrit un conteneur mobile 1 d'un seul mode de réalisation caractérisé selon la présente invention et en faisant référence aux des sins annexés.

Un conteneur mobile 1 se présente sous la forme d'un parallélépipède droit comme représenté sur la figure 7 dont la base 7 est parallèle au plancher 15 du véhicule de camping 2 et séparée du plancher 15 par quatre roulettes multidirectionnelles 11 et dont au moins deux situées d'un même coté de la base 7 sont munies d'un système de blocage de roue, les quatre roulettes multidirectionnelles 11 supportent le poids du conteneur mobile 1 et permettent de déplacer le conteneur mobile 1 dans toutes les directions en le faisant rouler sur le plancher 15 à l'aide des quatre roulettes multidirectionnelles 11 et de positionner le conteneur mobile 1 à l'endroit voulu et selon que cet endroit correspond à son emplacement désigné pour la nuit deux des roulettes multidirectionnelles 11 munies d'un système de blocage seront actionnées pour maintenir le conteneur mobile 1 à son emplacement durant la nuit et quand le jour il faudra déplacer le conteneur mobile 1 il suffira de débloquer les deux roulettes multidirectionnelles 11 munies d'un système de blocage et déplacer le conteneur mobile 1 en le faisant rouler à l'aide des quatre roulettes multidirectionnelles 11 vers son emplacement désigné pour le jour et quand le conteneur mobile 1 sera positionné à son emplacement de jour il sera alors solidarisé avec la structure du véhicule de camping 2 à l'aide d'un moyen de solidarisation 12 lequel est constitué d'une tige métallique sous forme d'axe 24 représenté en coupe selon les figures 8 et 9 et dont on s'apperçoit qu'à l'une des extrémités de l'axe 24 une saillie 25 est pratiquée et jouxtant avec une portée cylindrique 28 correspondante avec un alésage 32 pratiqué au travers du panneau 5 du conteneur mobile 1 et permettant à l'axe 24 de tourilloner dans l'alésage 32 , un espace correspondant à l'épaisseur de la cloison 4 est prévu entre la saillie 25 et le panneau 5 du conteneur mobile 1, à l'autre extrémité de l'axe 24 est prévue une portée cylindrique 29 correspondante avec un alésage 33 pratiqué au travers du panneau 6 du conteneur mobile 1 et permettant à l'axe 24 de tourilloner dans l'alésage 33 du panneau 6 du conteneur mobile 1, à l'extérieur du panneau 6 l'axe 24 du moyen de solirisation 12 est fixé perpendiculairement à l'axe 24 une poignée 26 et faisant corps avec l'axe 24 à l'aide d'une cale métallique et des rainures appropriées, l'axe 24 se termine à cette extrémité par un filetage et un écrou de manière à faire un réglage de positionnement et le blocage de l'ensemble du moyen de solidarisation 12, la poignée 26 est positionnée par rapport à un plan transversal de l'axe 24 de manière à être en opposition de la direction de la saillie 25 de l'axe 24 du moyen de solidarisation 12 du conteneur mobile 1.

Pour pouvoir solidariser le conteneur mobile 1 avec la paroi 4 du véhicule camping 2 il est prévu de percer une ouverture en forme de boutonnière 27 au travers de la paroi 4 du véhicule de camping 2 à une hauteur correspondante à la hauteur de l'axe 24 du moyen de solidarisation 12 du conteneur mobile 1 et à une distance du flanc 23 du véhicule de camping 1 égale à la distance séparant l'axe 24 du moyen de solidarisation du flanc 23 du véhicule de camping 2.La solidarisation consiste à déplacer le conteneur mobile 1 en le faisant rouler à l'aide des quatre roulettes 11 sur le plancher 15 du véhicule de camping 2 de manière à faire pénétrer la saillie 25 au travers de l'ouverture boutonnière 27 tout en prenant soin à ce que la direction de la saillie 25 soit dirigée parallèlement au plancher 15 du véhicule de camping 2 à l'aide de la poignée 26 du moyen de solidarisation 12 du conteneur mobile 1 et quand l'axe 24 prolongé de sa saillie 25 est passé au travers de la boutonnière 27 et que la surface d'appui du panneau 5 est en contact franc avec la surface d'appui de la cloison 4 la poignée 26 du moyen de solidarisation 12 peut être tournée d'un quart de tour et en direction du plancher 15 de manière à ce que la saillie 25 soit dirigée en sens opposé et vers le plafond 16, dans cette position la saillie 25 vient bloquer la paroi 4 et l'ensemble conteneur mobile 1 et la paroi 4 est solidarisé.

Quand tous les conteneurs mobiles 1 sont solidarisés, des contact électriques ferment un circuit électrique en série d'un circuit de de sécurité passant par chacun des conteneurs mobiles 1 et permettant le démarrage du moteur du véhicule de camping 2. Si un seul des conteneurs mobiles 1 est désolidarisé, le circuit en série est ouvert et le moteur ne peut démarrer.

## Revendications

1. Un conteneur mobile (1) insérable de manière indissoluble dans et avec un véhicule de camping (2) conçu avec une implantation adaptée à l'utilisation du dit conteneur mobile (1) et de telle manière que:
dans un premier temps,un couchage (3) relevable et faisant partie de l'équipement du dit véhicule de camping (2) est descendu horizontalement en libérant un espace suffisant entre le dit couchage (3) et le plafond (16) du véhicule de camping (2) pour permettre au moins à une personne de se coucher facilement sur le dit couchage (3) ;
dans un deuxième temps,le dit couchage (3) est relevé contre le plafond (16)du véhicule de camping (2) et un conteneur mobile (1) en provenance d'un endroit désigné autre que sous le couchage (3) du véhicule de camping (2) et que le dit conteneur mobile (1)de forme de parallélépipède rectangle droit comprenant une base rectangulaire (7) située parallèlement au plancher (15) du véhicule de camping (2) muni aux quatre coins de roulettes multidirectionnelles (11) dont deux situées d'un même coté sont dotées d'un système de blocage,un plateau supérieur (8) situé parallèlement à la base (7) et relié à la base (7) par quatre panneaux (31) (5) (10) et (6) verticaux par rapport au plancher (15) du véhicule de camping (2) et dont un des dits panneaux (10) est opposé à un panneau (31)situé parallèlement au panneau (10) et verticalement par rapport au plancher (15) du véhicule de camping (2) et que le dit panneau (31) fait office d'accès vers l'intérieur du parallélépipède rectangle faisant office de corps du conteneur mobile (1) et que le dit conteneur mobile (1) sert alors de contenant, le dit panneau (31)est attenant par un de ses cotés verticaux par rapport au plancher (15) du véhicule de camping (2) avec un des dits panneaux verticaux (5) lequel est percé d'un alésage (28) situé sensiblement au milieu de la surface du panneau (5) et que dans le dit alésage (28) tourillonne une extrémité d'un axe (24) d'un moyen de solidarisation (12) prolongé à l'extérieur du panneau (5) d'une saillie (25) et qu'entre cette saillie (25) et le panneau (5) est prévue une portée cylindrique (28) de l'axe (24) et dont la longueur de la portée est égale à l'épaisseur du panneau (5) dont il faut déduire l'épaisseur d'un épaulement prévu sur l'axe (24) et servant d'appui d'une part au panneau (5) et à l'extérieur du conteneur mobile (1) et d'autre part servant d'appui contre la cloison (4) du véhicule de camping (2) ,d'autre part et à l'autre extrémité de l'axe (24) du dit moyen de solidarisation (12) du dit conteneur mobile (1) est prévu une portée cylindrique (29) laquelle tourillonne dans un alésage (33) percé dans la paroi (6) du conteneur mobile (1) et situé de façon à ce que l'axe (24) soit parallèle au plancher (15) du véhicule de camping (2) et perpendiculaire aux panneaux (6) (5) et que le dit axe (24) du moyen de solidarisation (12) soit prolongé à l'extérieur du conteneur mobile (1) et du coté du panneau (6) d'une poignée (26) maintenue à l'aide d'une cale et de rainures appropriées et d'une vis de blocage (30) et servant également au règlage longitudinal de l'ensemble du moyen de solidarisation (12) avec le conteneur mobile (1) et que la dite poignée (26) soit située perpendiculairement à l'axe (24) et orientée en sens opposé à l'orientation de la saillie (25) située à l'autre extrémité de l'axe (24) du moyen de solidarisation (12) et que la dite poignée (26) puisse être actionnée de façon à être orientée parallèlement au plancher (15) et que la saillie (25) elle même orientée parallèlement au plancher (15) et en sens opposé de la poignée (26) et que la dite saillie (25) puisse s'introduire et traverser une ouverture en forme de boutonnière (27) orientée parallèlement au plancher (15) et située à la hauteur de l'axe (24) du moyen de solidarisation (12) et à distance du flanc (23) égale à la distance de l'axe (24) par rapport au flanc (23) et que la dite boutonnière (27) soit percée au travers de la cloison (4) du véhicule de camping (2) et que le conteneur mobile (1) ait été déplacé préalablement en le faisant rouler sur ses roulettes (11) et sur le plancher (15) et de manière à permettre à l'axe (24) prolongé de la saillie (25) de traverser la boutonnière (27) et que lorsque le panneau (5) du conteneur mobile (1) est en appui avec la surface d'appui de la cloison (4) du véhicule de camping (2) la poignée (26) soit actionnée en direction du plancher (15) du véhicule de camping (2) et que la saillie (25) alors orientée en sens opposé et vers le plafond (16) et que la portée de la saillie (25) vienne enserrer simultanément la cloison (4)et le panneau (5) et assurant une solidarisation franche de l'ensemble conteneur mobile (1) avec le véhicule de camping (2) et que le poids de la poignée (26) orientée vers le bas empèche toute désolidarisation de l'ensemble et que l'extrémité la plus éloignée de la saillie (25) alors orientée vers le haut et vers le plafond (16) met en contact des contacteurs électriques et ferme un circuit électrique d'un circuit en série comprenant d'éventuels autres contacteurs électriques et permettant au moteur du véhicule de camping (2) de fonctionner;
dans un troisième temps, le conteneur mobile (1) est désolidarisé et déplacé vers son emplacement désigné autre que sous le couchage (3) , le contact des contacteurs électriques du circuit en série et de sécurité est rompu et le circuit est ouvert et empêche le fonctionnement du moteur du véhicule de camping (2) et le couchage (3) est descendu en position d'utilisation;
dans un quatrième temps,correspondant au deuxième temps précédemment cité est suivi et ainsi de suite et alternativement de temps correspondants au premier temps cité ci-avant et au deuxième temps cité ci-avant.

2. Un conteneur mobile (1) et un véhicule de camping (2) suivant la revendication 1,**caractérisés en ce que** le panneau vertical (6) du conteneur mobile (1) est partiellement utilisé et partiellement ouvert pour permettre soit d'y effectuer du rangement,soit d'y insérer un élément de confort à l'intérieur du conteneur mobile (1) et à un niveau défini à cet effet et que le panneau (31) est lui aussi utilisé aux mêmes fins mais à un niveau autre que le niveau défini ci-avant, les niveaux étant considérés horizontalement et parallèlement par rapport au plancher (15) du véhicule de camping (2).

3. Un conteneur mobile (1) et un véhicule de camping (2) suivant les revendications 1 et 2, **caractérisés en ce que** le panneau vertical (10) du conteneur mobile (1) est consacré lui aussi et partiellement en étant partiellement ouvert afin d'y effectuer du rangement ou d'y insérer un élément de confort et de manière à ce que les niveaux consacrés par rapport aux panneaux respectifs (6),(31) et (10) se superposent à l'intérieur du conteneur mobile (1).

4. Un conteneur mobile (1) et un véhicule de camping (2) suivant les revendications 1,2 et 3,**caractérisés en ce que** le plateau supérieur (8) du conteneur mobile (1) est percé afin d'y introduire un élément de confort ou d'y incorporer du rangement et que le volume restant du conteneur mobile (1) réponde aux caractéristiques de l'une ou l'autre des revendications 1, 2 ou 3.

5. Un conteneur mobile (1) et un véhicule de camping (2) suivant la revendication 1,**caractérisés en ce que** le conteneur mobile(1) ne comporte pas de roulettes multidirectionnelles (11) sous la base (7) et que le dit conteneur mobile (1) comporte sur le plateau supérieur (8) deux glissières fixées d'une part aux extrémités du plateau (8) et d'autre part sous le couchage (3) et de manière à permettre le déplacement horizontal et parallèlement au plancher (15) et transversalement par rapport au flanc (23) du véhicule de camping (2) et de suivre le déplacement vertical du couchage (3).

6. Un conteneur mobile (1) et un véhicule de camping (2) suivant la revendication 5,**caractérisés en ce que** les deux glissières fixées d'une part sur le plateau (8) du conteneur mobile (1) et d'autre part sous le couchage (3) permettant au conteneur mobile (1) de se déplacer horizontalement et parallèlement au plancher (15) et longitudinalement par rapport au flanc (23) du véhicule de camping (2) et de suivre le déplacement vertical du couchage (3).

7. Un conteneur mobile (1) et un véhicule de camping (2) suivant les revendications 1 à 6,**caractérisés en ce que** le conteneur mobile (1) comporte une pluralité de moyens de solidarisation (12).

8. Un conteneur mobile (1) et un véhicule de camping (2) suivant les revendications 1 à 7,**caractérisé en ce que** le ou les dits moyens de solidarisation (12) fait ou font appel à une technique différente mais aboutissant au même résultat de solidarisation entre le conteneur mobile (1) avec la paroi (4) du véhicule de camping (2).

9. Un conteneur mobile (1) et un véhicule de camping (2) suivant les revendications 1 à 8,**caractérisé en ce que** un quelconque des panneaux verticaux (10), (6) ou (31) ne respecte pas rigoureusement la verticalité par rapport au plancher (15) mais qu'en réalité le dit panneau vertical (10),(6) ou (31) suive l'inclinaison soit du flan (23) du véhicule de camping (2) ou soit l'inclinaison d'un élément intérieur du véhicule et contre lequel le conteneur mobile (1) vient s'appuyer.

10. Une pluralité de conteneurs mobiles (1) et un véhicule de camping (2) suivant les revendications 1 à 9,**caractérisés en ce que** le véhicule de camping (2) contienne une pluralité de conteneurs mobiles (1).

11. Une pluralité de conteneurs mobiles (1) et un véhicule de camping (2) suivant les revendications 1 à 10,**caractérisés en ce que** le véhicule de camping (2) contienne une pluralité de couchages (3).

12. Un conteneur mobile (1) et un véhicule de camping (2) suivant les revendications 1 à 4 et 7 à 9, **caractérisés en ce que** le conteneur mobile (1) comporte des fixations sur un quelconque des panneaux (6) (10) ou (31) et destinées à la fixation d'un élément de confort et situés à l'extérieur du conteneur mobile (1), et que le dit élément de confort soit repliable si nécessaire et si possible.

13. Une pluralité de conteneurs mobiles (1) et un véhicule de camping (2) suivant les revendications 1, 10, 11 et 12,**caractérisés en ce que** le véhicule de camping (2) contienne une pluralité de conteneurs mobiles (1) comportant pour certains d'entre eux des fixations pour supporter des éléments de confort comme caractérisés suivant la revendication 12.

14. Un conteneur mobile (1) et un véhicule de camping (2) suivant la revendication 1, **caractérisés en ce que** le conteneur mobile (1) comporte dans le sens vertical par rapport au plancher (15) du véhicule de camping (2) une superposition de deux parallélépipèdes rectangle droit de dimentions différentes et de manière à pouvoir s'imbriquer dans ou avec des éléments constitués à l'intérieur du véhicule de camping (2).

15. Une pluralité de conteneurs mobiles (1) et un véhicule de camping (2) suivant les revendications 1 à 14, **caractérisés en ce que** le véhicule de camping (2) comporte une pluralité de conteneurs mobiles (1) comme caractérisés suivant la revendication 14.
